# EUROPÄISCHE PATENTSCHRIFT

(11) **EP 3 707 570 B1**
(45) Veröffentlichungstag und Bekanntmachung des Hinweises auf die Patenterteilung: **07.09.2022**
(21) Anmeldenummer: 18806980.1
(22) Anmeldetag: 05.11.2018
(51) Int. Cl.: G05B 19/4093, G05B 19/418

(54) **VERFAHREN ZUR HERSTELLUNG EINES SCHACHTBAUTEILS ODER EINES SCHACHTABSCHNITTS ODER EINES SCHACHTS**
METHOD FOR PRODUCING A SHAFT COMPONENT, A SHAFT SECTION, OR A SHAFT
PROCÉDÉ DE FABRICATION D'UN ÉLÉMENT DE GAINE OU D'UNE SECTION DE GAINE OU D'UNE GAINE

(30) Priorität: 06.11.2017 DE 102017125835
(43) Veröffentlichungstag der Anmeldung: 16.09.2020
(73) Patentinhaber: REHAU Industries SE & Co. KG, 95111 Rehau (DE)
(72) Erfinder: PSYK, Mario, 90431 Nürnberg (DE); EHM, Peter, 95028 Hof (DE); GAREIS, Jürgen, 95233 Helmbrechts (DE); HENDEL, Roland, 91074 Herzogenaurach (DE); HEGER, Tobias, 91315 Höchstadt a.d. Aisch (DE); KANIA, Guido, 91080 Marloffstein (DE); LAPSIN, Andrej, 95028 Hof (DE); MORETH, Heiko, 95185 Gattendorf (DE); STASCHIK, Peter, 91325 Adelsdorf (DE); WINTER, Karlheinz, 95111 Rehau (DE)
(86) Internationale Anmeldenummer: PCT/EP2018/080123
(87) Internationale Veröffentlichungsnummer: WO 2019/086651

(56) Entgegenhaltungen:
- DE-C1- 19 828 094
- US-A1- 2004 143 362
- US-A1- 2005 044 133
- US-B2- 8 255 076

## Beschreibung

Die Erfindung betrifft ein Verfahren für die Herstellung eines Schachtbauteils oder eines Schachtabschnitts oder eines Schachts.

Schachtsysteme für Schmutz- und Regenwasser werden heute aus Beton, Stahlbeton oder Kunststoff hergestellt. Üblicherweise werden zur Realisierung von Abwassernetzen alle Abwinklungen und Zusammenführungen der angeschlossenen Rohrleitungen in den Schachtbauteilen selbst durchgeführt, damit diese kritischen Punkte dauerhaft zugänglich sind und im Falle von Verstopfungen oder ähnlichem leicht gereinigt werden können.

Als Folge davon existieren zwar eine Reihe von standardisierten Schächten bzw. Schachtbauteilen in Form von Schachtunterteilen, z.B. solche mit geradem Durchlauf oder Zuläufen in vordefinierte Winkeln, meist in einem 15°-Raster.

Es zeigt sich aber, dass in jedem Abwasserkanalnetz eine große Anzahl von auftragsbezogen angefertigten Sonderschächten notwendig ist, deren Gerinne speziell nach den Vorgaben des Tiefbauplaners angefertigt werden muss, was beispielsweise die Winkel der Zuläufe, die Anzahl der Zuläufe, die Nennweiten, die Gefälle im Schachtunterteil und anderes mehr angeht.

Derartige individuell gefertigte Schächte bzw. Schachtbauteile werden bei einer Ausführung in Beton üblicherweise durch Ausmauern bzw. Ausklinkern von Gerinnen in leeren Betonringen oder Leerschachtböden hergestellt.

Im Falle von Kunststoffschächten werden entweder tiefgezogene Schalen in einen Ring eingeschweißt oder aus polymeren Habzeugen, wie Rohren, Platten oder Formteilen, durch einen Konfektionsprozess entsprechende Gerinneformen ausgebildet und stoffschlüssig in einen Ring eingeschweißt.

Derartig individuell hergestellte Schächte oder Schachbauteile erfordern zur manuellen oder teilautomatisierten Konfektion eine exakte Vorplanung.

Für den anschließenden komplexen, meist manuellen Herstellungsprozess ist ein hoher Arbeitszeitaufwand notwendig. Als Folge dessen sind derartige individuell hergestellte Schächte oder Schachtbauteile teuer, was die Herstellkosten angeht.

Ebenso weisen die durch Konfektionsarbeitsgänge hergestellten Schächte oder Schachtbauteile aus Polymermaterial aufgrund der Vielzahl an Schweiß- und Fräsarbeiten meist große Toleranzen und raue Oberflächen auf, was den störungsfreien Abfluss des Fluids behindern kann. Wenn z.B. abgewinkelte Gerinne herzustellen sind, so sind diese bei der Herstellung aus geraden Rohren durch segmentgeschweißte Rohrbögen in den notwendigen Winkeln auszuführen. Diese Segmente weichen von der idealen Kurvenbahn ab, als Folge sind Abschlusshindernisse möglich. Ein kontinuierlicher, idealer Biegeverlauf eines Gerinnes kann mit den kommerziell erhältlichen geraden Halbzeugen und Platten nicht oder nur mit unverhältnismäßig hohem Aufwand realisiert werden.

Aufgrund der geringen Stückzahl solcher Schächte bzw. Schachtbauteile ist eine Investition in entsprechende Spritzguss- oder Tiefziehwerkzeuge nicht wirtschaftlich.

Schließlich ist noch zu beachten, dass aufgrund von Lageabweichungen der eingemessenen Leitungen, aufgrund von unbekannten Bodenhindernissen oder wegen kreuzenden Leitungen nach erfolgter Planung die Ausführungspläne noch während der Bauphase anzupassen oder zu ändern sind.

Die US 2005/044133 A1 beschreibt beispielsweise ein Verfahren, aus Zeichnungen für ein Stahlgebäude eine Liste der Anzahl an benötigten Bauteilen zu generieren. Ein Computer Aided Manufacturing System (CAM) übernimmt dann anhand dieser Liste das Zuschneiden und Bearbeiten, beispielsweise Abkanten, des Stahlblechs für das Gebäude, Anordnen von Verbindungsmitteln und ähnliches.

Aus der US 2004/143362 A1 geht ein Verfahren zur Herstellung eines Bauteils hervor, das folgende Schritte umfasst:
- Empfang eines Modells des herzustellenden Bauteils;
- Abrufen einer Regel aus einer Regelsammlung eines Computers;
- Auswahl eines Merkmals des Modells durch Auswertung der Regel;
- Bestimmung eines Prozesses, der mit dem Merkmal verbunden ist;
- basierend auf diesem Prozess die Generierung eines Computercodes, um das Merkmal mittels einer computergesteuerten Maschine herzustellen.

Schließlich ist aus der US 8 255 076 B2 ein Verfahren bekannt, Daten aus einer Konstruktion eines Bauteils in Daten zur Steuerung einer Maschine umzuwandeln. Mit Hilfe der derart gesteuerten Maschine kann dann ein Bauteil bearbeitet oder hergestellt werden.

Im Vorfeld konfektionierte individuelle Schächte bzw. Schachtbauteile müssen in diesem Fall entweder verworfen oder neu gebaut oder aufwendig manuell umgebaut werden. Darüber hinaus offenbart die DE 19 828 094 ein Verfahren zur Herstellung von Schachtunterteilen aus Beton gemäß dem Oberbegriff des Anspruchs 1.

Hier setzt die Erfindung ein, deren Aufgabe es ist, ein Verfahren zur Herstellung eines Schachtbauteils oder eines Schachtabschnitts oder eines Schachts anzugeben, welches bzw. welcher individuell angefertigt ist, einfach und kostengünstig bereitgestellt werden kann und dessen Form in effizienter Weise aus Daten ermittelt wird.

Die Lösung der vorliegenden Aufgabe, ein Verfahren zur Herstellung eines Schachtbauteils oder eines Schachtabschnitts oder eines Schachts anzugeben, erfolgt gemäß vorliegender Erfindung nach Anspruch 1.

Es wurde erkannt, dass ein Verfahren zur Herstellung eines Schachtbauteils oder eines Schachtabschnitts oder eines Schachts die gestellte Aufgabe vollumfänglich löst, wenn vorgesehen ist, dass das Schachtbauteil oder der Schachtabschnitt oder der Schacht eine Funktionskontur aufweist mit einem Gerinne, mit dem Fluid leitbar ist und wenigstens einer Zuleiteinrichtung, um den Schachtbauteil oder dem Schachtabschnitt oder dem Schacht Fluid zuzuleiten und wenigstens einer Ableiteinrichtung, um Fluid vom Schachtbauteil oder Schachtabschnitt oder Schacht abzuleiten und einem Verbindungsabschnitt zur fluiddichten Verbindung des Schachtbauteils oder des Schachtabschnitts mit einem weiteren Bauteil, wobei folgende Schritte ablaufen:
(A) Einlesen bzw. Eingeben von Daten aus einem Plan (P) oder einer Zeichnung oder einem Vermessungsvorgang oder einem Datenmodell oder einer Liste oder einem geographischen Informationssystem (GIS) oder einem Datenspeicher in eine Datenverarbeitungsmaschine;
(B) Erzeugung eines ersten Datensatzes aus den in die Datenverarbeitungsmaschine eingelesenen Daten, der ein Schachtbauteil oder einen Schachtabschnitt oder einen Schacht repräsentiert;
(C) Erzeugung eines zweiten Datensatzes aus dem ersten Datensatz, wobei der zweite Datensatz geeignet ist, eine Maschine für einen Materialabtrag und / oder einen Materialaufbau von bzw. an einem Körper zu steuern;
(D) Erstellung des Schachtbauteils oder des Schachtabschnitts oder des Schachts aus dem Körper mit Hilfe der Maschine für den Materialabtrag und / oder den Materialaufbau, die den zweiten Datensatz bei der Herstellung des Schachtbauteils oder des Schachtabschnitts oder des Schachts zur Steuerung der Maschine nutzt, wobei die Funktionskontur des Schachtbauteils oder des Schachtabschnitts oder des Schachts wenigstens abschnittsweise aus dem Körper durch Materialabtrag und / oder Materialaufbau gebildet ist.
(E) dass der zweite Datensatz (14), der aus dem ersten Datensatz (13) erzeugt ist und der geeignet ist, eine Maschine (15) für einen Materialabtrag und / oder einen Materialaufbau von bzw. an einem Körper (9) zu steuern, Informationen umfasst, die eine Abfolge von Fräsbahnen, eine Auswahl von groben und feinen Fräswerkzeugen, einen Aufbau von Hilfs- und Stabilisierungsabschnitten bei einem 3-d-Druck vorgeben und die somit Fertigung des Schachtbauteils oder des Schachtabschnitts oder des Schachts vereinfachen,
(F) eine Erstellung des Schachtbauteils (1) oder des Schachtabschnitts oder des Schachts aus einem Körper (9), der aus einem Polymermaterial besteht oder ein Polymermaterial enthält, mit Hilfe der Maschine (15) für den Materialabtrag durch Fräsen und / oder den Materialaufbau durch einen 3-d Druckvorgang erfolgt, die den zweiten Datensatz (14) bei der Herstellung des Schachtbauteils (1) oder des Schachtabschnitts oder des Schachts zur Steuerung der Maschine (15) für den Materialabtrag und / oder den Materialaufbau nutzt,
(G) dass nach dem Schritt (F) das erstellte Schachtbauteil (1) oder der Schachtabschnitt oder der Schacht durch Tasten und / oder durch ein optisches Verfahren und / oder durch Empfang von an diesem reflektierter elektromagnetischer Strahlung vermessen wird.

Durch die vorliegende Erfindung wird ein Verfahren zur Herstellung eines Schachtbauteils oder eines Schachtabschnitts oder eines Schachts bereitgestellt, welche es gestattet, in einfacher und kostengünstiger Weise anhand von aus verschiedenen Quellen stammenden Daten Datensätze zu erzeugen, durch die ein Schachtbauteil oder ein Schachtabschnitt oder ein Schacht repräsentiert ist.

Mit deren Hilfe ist es auch möglich eine Maschine für den Materialabtrag und / oder den Materialaufbau von bzw. an einem Körper zu steuern, wobei das Schachtbauteil oder der Schachtabschnitt oder der Schacht durch die Maschine aus einem Körper hergestellt wird.

Die Nachteile bzw. Beschränkungen des Standes der Technik sind damit überwunden.

Es ist damit insbesondere in einfacher Weise möglich, ein benötigtes individuell gestaltetes Schachtbauteil oder einen Schachtabschnitt oder einen Schacht genau nach den Notwendigkeiten, die für dessen Anschluss an die Rohre des Kanalnetzes herrschen, herzustellen.

Im vorliegenden Erfindungszusammenhang ist mit dem Begriff Schachtbauteil ein Bauteil gemeint, dass einen Abschnitt eines Schachts darstellt, also beispielsweise ein Schachtunterteil oder ein Schachtabschnitt, der das Schachtunterteil umfasst und eine große Höhenerstreckung aufweist, wobei diese beispielsweise das 1- bis 5-fache des Durchmessers des zylindrisch ausgebildeten Schachtabschnitts beträgt.

Es ist auf diese Weise einfacher, ausgehend von einem solchen Schachtabschnitt mit einer großen Höhenerstreckung, einen Schacht zu bauen, insbesondere einen solchen, der tief in einer Baugrube anzuordnen ist, da im Idealfall die Höhenerstreckung derart gewählt werden kann, dass zur Komplettierung des Schachts nur noch ein Schachtoberteil auf den Schachtabschnitt aufzusetzen und mit diesem fluiddicht zu verbinden ist, was Zeit und Kosten einspart.

Als sehr vorteilhaft kann sich bei der vorliegenden Erfindung erweisen, wenn der erste Datensatz Informationen umfasst, das Schachtbauteil oder den Schachtabschnitt oder den Schacht visuell darzustellen, und Informationen zu geometrischen und / oder leistungsbezogenen Daten der zur Herstellung des Schachtbauteils oder des Schachtabschnitts oder des Schachts eingesetzten Maschine, und Informationen, die Maschine zumindest teilweise zu steuern.

Durch diese Maßnahme kann das Schachtbauteil oder der Schachtabschnitt oder der Schacht besonders sicher und kostengünstig hergestellt werden.

Es kann sich bei der vorliegenden Erfindung als vorteilhaft erweisen, wenn vorgesehen ist, dass die im Datenspeicher hinterlegten Daten Abschnitte des Schachtbauteils oder des Schachtabschnitts oder des Schachts repräsentieren. Da bei einem Schachtbauteil oder bei einem Schachtabschnitt oder bei einem Schacht regelmäßig beispielsweise Muffenabschnitte vorgesehen bzw. auszubilden sind, an denen die Rohre des Kanalnetzes am Schachtbauteil oder am Schachtabschnitt oder am Schacht anzuschließen sind, und diese Muffenabschnitte beispielsweise Standardmaße, insbesondere Standarddurchmesser aufweisen, können derartige Daten im Datenspeicher hinterlegt sein. Auch entsprechende Einrichtungen, ein Rohr eines Kanalnetzes fluiddicht am Schachtbauteil oder am Schachtabschnitt oder am Schacht anzuschließen, wozu beispielsweise eine Dichtung in einer Nut vorgesehen ist, kann in einfacher Weise Datenspeicher hinterlegt und so leicht darauf zugegriffen werden.

Zu diesen im Datenspeicher hinterlegten Daten, die Abschnitte des Schachtbauteils oder eines Schachtabschnitts repräsentieren, gehören beispielsweise auch die Verbindungsabschnitte, die am Schachtbauteil oder am Schachtabschnitt dazu dienen, eine fluiddichte Verbindung des Schachtbauteils oder des Schachtabschnitts beispielsweise mit einem Schachtmittelteil oder ein Schachtoberteil zu einem Schacht auszubilden.

Allgemein können Daten, die Abschnitte eines Schachtbauteils oder eines Schachtabschnitts oder eines Schachts repräsentieren und die regelmäßig benötigt werden, in einer Art Bibliothek in dem Datenspeicher hinterlegt werden.

Im Erfindungszusammenhang liegt auch, dass ein Datenmodell beispielsweise auf dem weit verbreiteten ISYBAU Austauschformat XML beruht und dieses nutzt, um daraus Daten für ein Schachtbauteil oder einen Schachtabschnitt oder einen Schacht zu gewinnen.

Auch können Objektfragebögen, die analog oder digital geführt werden, Daten enthalten, die für die Fertigung eines Schachtbauteils oder eines Schachtabschnitts oder eines Schachts heranziehbar sind.

Als sehr günstig kann sich bei der vorliegenden Erfindung ergeben, wenn die Daten aus dem Plan und / oder Zeichnung und / oder dem Vermessungsvorgang und / oder der Liste durch ein Eingabegerät, wie beispielsweise einen Scanner in die Datenverarbeitungsmaschine eingelesen werden.

Durch die Nutzung eines Eingabegeräts, wie beispielsweise eines Scanners ist es sehr einfach, die Daten aus dem Plan und / oder Zeichnung und / oder dem Vermessungsvorgang und / oder der Liste in die Datenverarbeitungsmaschine einzulesen, da dies in schneller Weise und fehlerfrei erfolgen kann.

Es ist damit auch gewährleistet, dass die Daten vollständig in die Datenverarbeitungsmaschine eingelesen werden können.

Daten, die beispielsweise aus einem Datenmodell und einem geografischen Informationssystem (GIS) stammen, liegen im Allgemeiner in digitaler Form vor und können ohne weiteres direkt in die Datenverarbeitungsmaschine eingelesen werden, ohne dass es dazu eines Eingabegeräts bedarf.

Solche Daten können ganz allgemein Daten sein, die Punkte, die für die Erstellung des Kanalnetzes und insbesondere für die Auslegung eines Schachtbauteils oder eines Schachtabschnitts oder eines Schachts wesentlich sind, repräsentieren. Mit Vorteil können dabei geographische Daten herangezogen werden, die beispielsweise den Ort jedes Punktes im Koordinatennetz mit Angaben der geographischen Länge und geographischen Breite, sowie die Höhe jedes Punktes angeben.

Als sehr günstig kann sich bei der vorliegenden Erfindung erweisen, wenn vorgesehen ist, dass der aus den in die Datenverarbeitungsmaschine eingelesenen Daten erzeugte erste Datensatz visuell darstellbar ist.

Der aus den in die Datenverarbeitungsmaschine eingelesenen Daten erzeugte erste Datensatz präsentiert ein Schachtbauteil oder einen Schachtabschnitt oder einen Schacht und kann zur Visualisierung bzw. zur Überprüfung oder zur Plausibilisierung visuell dargestellt werden, womit es ohne weiteres möglich ist, die aktuelle Planung des Kanalnetzes und insbesondere die notwendige Form des Schachtbauteils oder des Schachtabschnitts oder des Schachts zu überprüfen und ggf. zu korrigieren oder zu ergänzen.

Als besonders vorteilhaft kann sich bei der vorliegenden Erfindung ergeben, wenn vorgesehen ist, dass zwischen den Schritten (B) und (C) der erste Datensatz und / oder aus dem ersten Datensatz erzeugte Schnitte oder Zeichnungen und / oder Einbauhinweise dem Auftraggeber zur Freigabe übermittelbar ist.

Durch diese Ausgestaltung der Erfindung ist es möglich, dass der Auftraggeber die Möglichkeit hat, das in Auftrag gegebene Schachtbauteil oder den Schachtabschnitt oder den Schacht ggf. noch zu überarbeiten bzw. zu verändern bevor dieses dann hergestellt wird.

In sehr günstiger Weise kann bei der vorliegenden Erfindung vorgesehen sein, dass der zweite Datensatz, der aus dem ersten Datensatz erzeugt ist und der geeignet ist, eine Maschine für einen Materialabtrag und / oder einen Materialaufbau von bzw. an einem Körper zu steuern, Informationen umfasst, die bei dem Materialabtrag und / oder dem Materialaufbau von bzw. an einem Körper die Fertigung des Schachtbauteils oder des Schachtabschnitts oder des Schachts vereinfachen, indem beispielsweise die Abfolge der Fräsbahnen, die Auswahl von groben und feinen Fräswerkzeugen, der Aufbau von Hilfs- und Stabilisierungsabschnitten beim 3-d-Druck und anderes mehr erfasst und vorgegeben werden.

Hierdurch kann eine besonders einfache, sichere und kostengünstige Fertigung eines Schachtbauteils oder eines Schachtabschnitts oder eines Schachts bewerkstelligt werden.

Als besonders günstig kann sich bei der vorliegenden Erfindung erweisen, wenn vorgesehen ist, dass nach dem Schritt (C) das erstellte Schachtbauteil oder der Schachtabschnitt oder der Schacht durch Tasten und / oder durch ein optisches Verfahren und / oder durch Empfang von an diesem reflektierter elektromagnetischer Strahlung vermessen wird. Durch diese Maßnahme kann sichergestellt werden, dass das hergestellte Schachtbauteil oder der Schachtabschnitt oder der Schacht exakt den Vorgaben entspricht, wodurch eine erhöhte Sicherheit resultiert, dass das hergestellte Schachtbauteil oder der Schachtabschnitt oder der Schacht beim Einbau an der Baustelle passgenau mit den Rohrleitungen des Kanalnetzes verbindbar ist und dass die Anschlüsse, das Gefälle sowie weitere messtechnische Parameter des Schachtbauteils oder des Schachtabschnitts oder des Schachts genau der Spezifikation entsprechen.

In einer günstigen Fortentwicklung der vorliegenden Erfindung kann hierbei auch vorgesehen sein, dass die bei der Vermessung des hergestellten Schachtbauteils oder des Schachtabschnitts oder des Schachts ermittelten Daten, welche die Ist-Werte darstellen, mit den Soll-Werten, die durch den ersten Datensatz repräsentiert werden, verglichen und gespeichert werden.

Bei einer nächsten gleichartigen Fertigung eines Schachtbauteils oder eines Schachtabschnitts oder eines Schachts kann die Bearbeitung des Körpers auf Grund dieser Daten angepasst und optimiert werden, wobei ein Selbstlerneffekt des Systems erfolgen kann.

Das Verfahren der vorliegenden Erfindung kann sich als günstig erweisen, wenn vorgesehen ist, dass das Schachtbauteil oder der Schachtabschnitt oder der Schacht einteilig oder mehrteilig ausgebildet ist.

Durch die Ausbildung eines mehrteiligen Schachtbauteils oder Schachtabschnitts oder Schachts kann dessen Fertigung in besonders kostengünstiger Ausführung erfolgen.

In besonders bevorzugter Weise kann das Verfahren der vorliegenden Erfindung wie folgt angewandt werden:
Als sehr vorteilhaft kann sich bei dem Verfahren der vorliegenden Erfindung ergeben, wenn vorgesehen ist, dass der Körper zur Erstellung des Schachtbauteils oder des Schachtabschnitts oder des Schachts aus einem Polymermaterial besteht oder ein Polymermaterial enthält, wobei das Polymermaterial bevorzugt ein Thermoplast, und besonders bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist.

Derartige Polymermaterialien sind langlebig, inert, stabil, weisen ein geringes Gewicht auf, sind einfach handhabbar, leicht installierbar und können kostengünstig bereitgestellt werden. Insbesondere ist es auf diese Weise sehr einfach, aus dem Polymermaterial den Körper zu bilden.

Es kann im Rahmen der vorliegenden Erfindung vorgesehen sein, dass das Polymermaterial Zusätze enthält, die das Wärmeleitvermögen des Polymermaterials verbessern, wie beispielsweise Kreide, Talkum oder Bornitrid, um so die beim Materialabtrag, beispielsweise beim Fräsen, freiwerdende Wärme abzuleiten. Der Anteil an solchen Zusätzen soll aber auf das nötige Maß beschränkt bleiben, da diese die Fräswerkzeuge verschleißen, was weitgehend vermieden werden soll.

Auch wurde im Rahmen der vorliegenden Erfindung erkannt, dass das Schachtbauteil oder der Schachtabschnitt oder der Schacht aus dem Körper dann ganz besonders vorteilhaft erstellbar ist, wenn vorgesehen ist, das Polymermaterial für einen Materialaufbau, zum Beispiel in einem 3D-Druckverfahren, zur Erstellung zu nutzen.

Das aus dem Körper erstellte Schachtbauteil oder der Schachtabschnitt oder der Schacht ist dadurch fest ausgebildet und weist keinen oder praktisch keinen Verzug auf und ist maßhaltig.

Überdies kann so eine besonders hohe Oberflächenqualität sowohl durch das Fräsen des Polymermaterials, wie auch durch den Materialaufbau, beispielsweise in einem 3D-Druckverfahren, erzielt werden.

Durch das verwendete Polymermaterial ist das Schachtbauteil oder der Schachtabschnitt oder der Schacht langlebig, inert, stabil, weist ein angepasstes Gewicht auf, ist gut handhabbar, kann kostengünstig bereitgestellt werden und ist durch Materialabtrag und / oder Materialaubau unter Nutzung eines Körpers einfach zu bilden.

Die Aufgabe der vorliegenden Erfindung, ein Schachtbauteil oder einen Schachtabschnitt oder einen Schacht anzugeben, das bzw. der nach dem Verfahren hergestellt ist, wie vorstehend beschrieben, erfolgt gemäß Anspruch 8.

Im Rahmen der vorliegenden Erfindung hat sich herausgestellt, dass ein Schachtbauteil oder ein Schachtabschnitt oder ein Schacht, das bzw. der nach dem vorstehend beschriebenen Verfahren hergestellt ist, kostengünstig zugänglich ist und genau den technischen Anforderungen und Spezifikationen entspricht.

Das erfindungsgemäße Schachtbauteil oder der Schachtabschnitt lässt sich in einfacher Weise zu einem Schacht ergänzen, indem das Schachtbauteil oder der Schachtabschnitt je nach technischer Notwendigkeit mit einem oder mehreren Schachtmittelteilen und / oder einem Schachtoberteil zu einem Schacht verbaut wird.

Mit besonderem Vorteil umfasst ein Fluidleit-, -aufnahme- und -speichersystem einen solchen Schacht, wie vorstehend beschrieben.

Ein solches Fluidleit-, -aufnahme- und -speichersystem ist durch das Vorsehen eines Schachts, wie vorstehend beschrieben, besonders aufgewertet.

Anwendung findet die vorliegende Erfindung insbesondere im Bereich der Kanal- und Abwassertechnik bei der Herstellung von Schachtbauteilen oder Schachtabschnitten oder Schächten.

Durch die vorliegende Erfindung können Schachtbauteile oder Schachtabschnitte und damit auch Schächte ohne großen Aufwand genau nach vorgegebener Spezifikation gefertigt werden.

Neben der geschilderten Anwendung gibt es weitere Anwendungsfelder in der Regenwasserbewirtschaftung, bei Hausanschlüssen, in Kläranlagen, in der Schwimmbadtechnik, in der Industrie, in der Landwirtschaft und in weiteren Bereichen.

Weitere wichtige Merkmale und Vorteile der Erfindung ergeben sich aus den Unteransprüchen, aus den Figuren und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert.

Hierzu zeigt:
- Fig. 1:: einen schematischen Ablauf des Verfahrens der Herstellung eines Schachtbauteils in Form eines Schachtunterteils aus einem Körper;
- Fig. 2:: eine schematische perspektivische Ansicht eines Schachtunterteils.

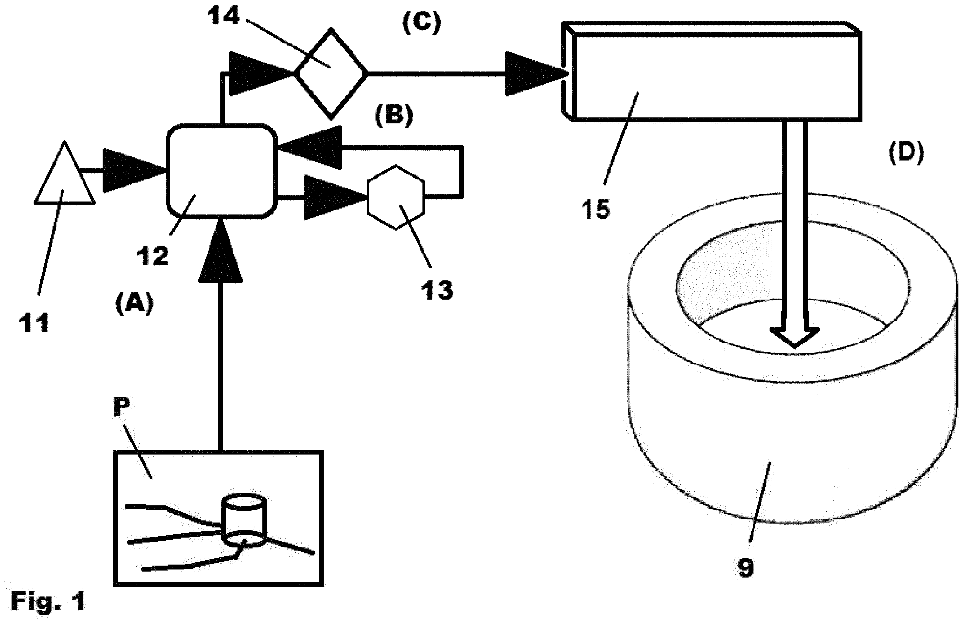

In der Fig. 1 ist der schematische Ablauf des Verfahrens der Herstellung eines Schachtbauteils in Form eines Schachtunterteils aus einem Körper 9 gezeigt.

In der Fig. 1 ist der erste Schritt A dargestellt, der das Einlesen bzw. Eingeben von Daten aus einem Plan P und / oder einer Zeichnung und / oder einem Vermessungsvorgang und / oder einem Datenmodell und / oder einer Liste und / oder einem geografischen Informationssystem (GIS) und / oder einem Datenspeicher 11 in eine Datenverarbeitungsmaschine 12 schematisch zeigt.

Weiterhin greift die Datenverarbeitungsmaschine 12 auf einen Datenspeicher 11 zu, in welchem Daten abgelegt sind.

Aus diesen Daten, umfassend den Daten aus dem Datenspeicher 11 und den Daten aus dem Plan P sowie gegebenenfalls weiteren Daten aus anderen Quellen, erstellt die Datenverarbeitungsmaschine 12 den ersten Datensatz 13.

Im zweiten Schritt B ist die Erzeugung eines ersten Datensatzes 13 aus den in die Datenverarbeitungsmaschine 12 eingelesenen Daten schematisch dargestellt.

Der erste Datensatz 13 repräsentiert ein Schachtunterteil.

Der erste Datensatz 13 umfasst Informationen, das Schachtunterteil visuell darzustellen, und Informationen zu geometrischen und / oder leistungsbezogenen Daten der zur Herstellung des Schachtunterteils eingesetzten Maschine 15, und Informationen, die Maschine 15 zumindest teilweise zu steuern.

Die Maschine 15, die als Maschine zum Materialabtrag und / oder zum Materialauftrag ausgebildet ist, bearbeitet den Körper 9, der zweiteilig ausgebildet ist, um daraus das Schachtunterteil zu formen.

Die Steuerung der Maschine 15 erfolgt durch einen Datensatz, durch den die einzelnen Arbeitsschritte der Maschine 15 ausgeführt werden.

Hierzu wird der zweite Datensatz 14 von der Datenverarbeitungsmaschine 12 der Maschine 15 zugeleitet, was im Schritt C versinnbildlicht ist.

Der zweite Datensatz 14, der ein Schachtunterteil repräsentiert und der geeignet ist, die Maschine 15 zu steuern, um aus einem Körper 9 ein Schachtunterteil zu formen, ist in der Datenverarbeitungsmaschine 12 abgelegt und dort abrufbar, um der Maschine 15 zugeleitet zu werden.

Der zweite Datensatz 14 ist in der Datenverarbeitungsmaschine 12 gebildet worden, indem der zweite Datensatzes 14 aus dem ersten Datensatz 13 und / oder den eingelesenen bzw. eingegebenen Daten generiert ist.

Der zweite Datensatz 14 umfasst insbesondere auch Daten, die Maschine 15 derart zu steuern, dass die Herstellung des Schachtunterteils schnell, sicher und kostengünstig durchführbar ist, wozu der zweite Datensatz 14 Informationen umfasst, wie beispielsweise die Abfolge der Fräsbahnen, die Auswahl von groben und feinen Fräswerkzeugen, der Aufbau von Hilfs- und Stabilisierungsabschnitten beim 3-d-Druck und anderes, wodurch eine besonders effektive Bearbeitung des Körpers 9 durch die Maschine 15 möglich ist.

Im nachfolgenden vierten Schritt D ist die Erstellung des Schachtunterteils 1 aus dem Körper 9 mit Hilfe der Maschine 15 für den Materialabtrag und / oder den Materialaufbau, die den zweiten Datensatz 14 bei der Herstellung des Schachtunterteils 1 zur Steuerung nutzt, wobei die Funktionskontur 2 des Schachtunterteils 1 wenigstens abschnittsweise aus dem Körper 9 durch Materialabtrag und / oder Materialaufbau gebildet ist, schematisch abgebildet.

Es versteht sich, dass die vorstehenden Ausführungen in gleicher Weise zutreffen für ein Verfahren zur Herstellung eines Schachtabschnitts oder eines Schachts.

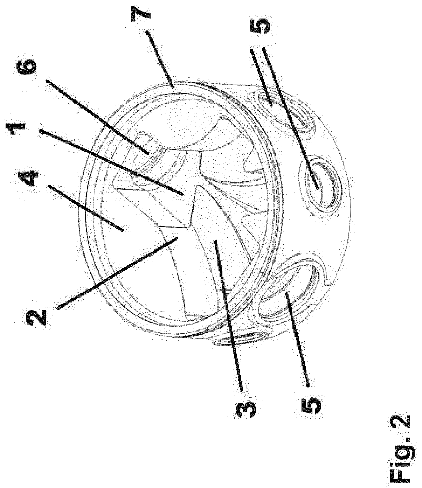

In der Fig. 2 ist in einer schematischen perspektivischen Ansicht ein Schachtunterteil 1 gezeigt.

Am Schachtunterteil 1 ist die Funktionskontur 2 ausgebildet, welche ein Gerinne 3 umfasst, das dazu dient, Fluid zu leiten.

An der Zylindermantelfläche des Schachtunterteils 1 sind Zuleiteinrichtungen 5 ausgebildet, die derartig geformt sind, dass mit diesen Zuleitrohre verbindbar, beispielsweise in diese einsteckbar sind. Die Zuleiteinrichtungen 5 sind weiterhin mit einer in Fig. 1 nicht gezeigten Nut versehen, um in der Nut ein Dichtungselement aufzunehmen, welches eine fluiddichte Verbindung des an das Schachtunterteil 1 anzuschließenden Zuleitrohres gestattet.

Eine Ableiteinrichtung 6, die in Form eines Muffenanschlusses ausgebildet ist, ist am Schachtunterteil 1 ebenfalls ausgeformt. An der Ableiteinrichtung 6 ist ein Ableitrohr anschließbar, welches ebenso wie vorstehend beschrieben fluiddicht mit dem Schachtunterteil 1 durch ein Dichtungselement, das in einer Nut an der Ableiteinrichtung 6 aufgenommen ist, verbunden ist.

Das Gerinne 3 im Schachtunterteil 1 wird durch Trittflächen 4 begrenzt, welche gestatten, dass dort Personal, das sich im Schacht beispielsweise zu Reinigungs- oder Kontrollzwecken aufhält, auftritt.

Am Schachtunterteil 1 ist weiterhin ein Verbindungsabschnitt 7 ausgebildet, der dazu dient, dass das Schachtunterteil 1 fluiddicht mit einem hier nicht gezeigten Schachtmittelteil oder einem Schachtoberteil verbindbar ist.

Der Verbindungsabschnitt 7 ist als in Einbaulage nach oben hervorstehender Rand ausgebildet, welcher ebenfalls eine Nut mit einem in der Nut aufgenommenen Dichtungselement aufweisen kann.

### Bezugszeichenliste

- 1: Schachtbauteil oder Schachtabschnitt oder Schacht
- 2: Funktionskontur
- 3: Gerinne
- 4: Trittfläche
- 5: Zuleiteinrichtung
- 6: Ableiteinrichtung
- 7: Verbindungsabschnitt
- 9: Körper
- 11: Datenspeicher
- 12: Datenverarbeitungsmaschine
- 13: erster Datensatz
- 14: zweiter Datensatz
- 15: Maschine
- 30: Schacht
- 40: Fluidleit-, -aufnahme- und -speichersystem
- (A): Schritt
- (B): Schritt
- (C): Schritt
- (D): Schritt
- P: Plan

## Patentansprüche

1. Verfahren zur Herstellung eines Schachtbauteils (1) oder eines Schachtabschnitts oder eines Schachts, aufweisend eine Funktionskontur (2) mit einem Gerinne (3), mit dem Fluid leitbar ist, und wenigstens einer Zuleiteinrichtung (5), um dem Schachtbauteil (1) oder dem Schachtabschnitt oder dem Schacht Fluid zuzuleiten, und wenigstens einer Ableiteinrichtung (6), um Fluid vom Schachtbauteil (1) oder Schachtabschnitt oder Schacht abzuleiten, und bei dem Schachtbauteil (1) oder Schachtabschnitt einen Verbindungsabschnitt (7) zur fluiddichten Verbindung des Schachtbauteils (1) oder des Schachtabschnitts mit einem Bauteil, mit den Schritten:
(A) Einlesen bzw. Eingeben von Daten aus einem Plan (P) oder einer Zeichnung oder einem Vermessungsvorgang oder einem Datenmodell oder einer Liste oder einem geographischen Informationssystem (GIS) oder einem Datenspeicher (11) in eine Datenverarbeitungsmaschine (12);
(B) Erzeugung eines ersten Datensatzes (13) aus den in die Datenverarbeitungsmaschine (12) eingelesenen Daten, der ein Schachtbauteil (1) oder einen Schachtabschnitt oder einen Schacht repräsentiert;
(C) Erzeugung eines zweiten Datensatzes (14) aus dem ersten Datensatz (13) , wobei der zweite Datensatz (14) geeignet ist, eine Maschine (15) für einen Materialabtrag und / oder einen Materialaufbau von bzw. an einem Körper (9) zu steuern,
(D) Erstellung des Schachtbauteils (1) oder des Schachtabschnitts oder des Schachts aus dem Körper (9) mit Hilfe der Maschine (15) für den Materialabtrag und / oder den Materialaufbau, die den zweiten Datensatz bei der Herstellung des Schachtbauteils oder des Schachtabschnitts oder des Schachts zur Steuerung der Maschine nutzt, wobei die Funktionskontur des Schachtbauteils oder des Schachtabschnitts oder des Schachts wenigstens abschnittsweise aus dem Körper durch Materialabtrag und / oder Materialaufbau gebildet ist.
**dadurch gekennzeichnet, dass**
(E) dass der zweite Datensatz (14), der aus dem ersten Datensatz (13) erzeugt ist und der geeignet ist, eine Maschine (15) für einen Materialabtrag und / oder einen Materialaufbau von bzw. an einem Körper (9) zu steuern, Informationen umfasst, die eine Abfolge von Fräsbahnen, eine Auswahl von groben und feinen Fräswerkzeugen, einen Aufbau von Hilfs- und Stabilisierungsabschnitten bei einem 3-d-Druck vorgeben und die somit Fertigung des Schachtbauteils oder des Schachtabschnitts oder des Schachts vereinfachen,
(F) eine Erstellung des Schachtbauteils (1) oder des Schachtabschnitts oder des Schachts aus einem Körper (9), der aus einem Polymermaterial besteht oder ein Polymermaterial enthält, mit Hilfe der Maschine (15) für den Materialabtrag durch Fräsen und / oder den Materialaufbau durch einen 3-d Druckvorgang erfolgt, die den zweiten Datensatz (14) bei der Herstellung des Schachtbauteils (1) oder des Schachtabschnitts oder des Schachts zur Steuerung der Maschine (15) für den Materialabtrag und / oder den Materialaufbau nutzt,
(G) dass nach dem Schritt (F) das erstellte Schachtbauteil (1) oder der Schachtabschnitt oder der Schacht durch Tasten und / oder durch ein optisches Verfahren und / oder durch Empfang von an diesem reflektierter elektromagnetischer Strahlung vermessen wird.

2. Verfahren nach Anspruch 1, **dadurch gekennzeichnet, dass** der Körper (9) zur Erstellung des Schachtbauteils oder des Schachtabschnitts oder des Schachts der aus einem Polymermaterial besteht oder ein Polymermaterial enthält, ein Thermoplast, und bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist.

3. Verfahren nach Anspruch 1 oder 2, **dadurch gekennzeichnet, dass** der erste Datensatz (13) Informationen umfasst, das Schachtbauteil (1) oder den Schachtabschnitt oder den Schacht visuell darzustellen, und Informationen zu geometrischen und / oder leistungsbezogenen Daten der zur Herstellung des Schachtbauteils (1) oder des Schachtabschnitts oder des Schachts eingesetzten Maschine (15), und Informationen, die Maschine (15) zumindest teilweise zu steuern.

4. Verfahren nach Anspruch 1, 2 oder 3, **dadurch gekennzeichnet, dass** die in dem Datenspeicher (11) hinterlegten Daten Abschnitte des Schachtbauteils (1) oder des Schachtabschnitts oder des Schachts repräsentieren.

5. Verfahren nach einem der vorangehenden Ansprüche, **dadurch gekennzeichnet, dass** die Daten aus dem Plan (P) oder der Zeichnung oder dem Vermessungsvorgang oder der Liste durch ein Eingabegerät, wie beispielsweise einen Scanner, in die Datenverarbeitungsmaschine (12) eingelesen werden.

## Claims

1. A method for producing a shaft component (1) or a shaft portion or a shaft, having a functional contour (2) with a channel (3), with which fluid can be conducted, and with at least one feed device (5) in order to feed fluid to the shaft component (1) or the shaft portion or the shaft, and with at least one discharge device (6) in order to discharge fluid from the shaft component (1) or the shaft portion or the shaft, the shaft component (1) or shaft portion having a connection portion (7) for connecting the shaft component (1) or the shaft portion fluid-tightly to a component, the method having the steps of:
(A) reading or entering data from a plan (P) or a drawing or a survey process or a data model or a list or a geographical information system (GIS) or a data memory (11) into a data processing machine (12),
(B) generating a first data set (13) from the data read into the data processing machine (12), said first data set representing a shaft component (1) or a shaft portion or a shaft,
(C) generating a second data set (14) from the first data set (13), wherein the second data set (14) is suitable for controlling a machine (15) for a material removal and/or a material build-up from or on a body (9), and
(D) creating the shaft component (1) or the shaft portion or the shaft from the body (9) using the machine (15) for material removal and/or material build-up, which machine uses the second data set when producing the shaft component or the shaft portion or the shaft to control the machine, wherein the functional contour of the shaft component or of the shaft portion or of the shaft is formed at least in some sections from the body by material removal and/or material build-up
**characterised in that**
(E) the second data set (14), which is produced from the first data set (13) and which is suitable for controlling a machine (15) for removing material and/or building up material from or on a body (9), comprises information that specifies a sequence of milling paths, a selection of coarse and fine milling tools and a build-up of auxiliary and stabilisation portions for 3D printing and that thus simplifies the manufacture of the shaft component or of the shaft portion or of the shaft,
(F) the shaft component (1) or the shaft portion or the shaft is created from a body (9) consisting of a polymer material or containing a polymer material using the machine (15) for the material removal by milling and/or the material build-up by a 3D printing process, said machine using the second data set (14) in the production of the shaft component (1) or of the shaft portion or of the shaft to control the machine (15) for the material removal and/or the material build-up,
(G) after step (F) the created shaft component (1) or the shaft portion or the shaft is surveyed by being probed and/or by an optical method and/or by receipt of electromagnetic radiation reflected at the shaft component, the shaft portion or the shaft.

2. The method according to claim 1, **characterised in that** the body (9) for creating the shaft component or the shaft portion or the shaft, said body consisting of a polymer material or containing a polymer material, is a thermoplastic, and preferably a polyolefin, for example a polypropylene or a polyethylene or a polybutylene, or a copolymer of the aforementioned, or a crosslinked polyolefin, in particular a crosslinked polyethylene, or a polyvinyl chloride, or a polyurethane.

3. The method according to claim 1 or 2, **characterised in that** the first data set (13) comprises information to visually present the shaft component (1) or the shaft portion or the shaft, and information regarding geometric and/or performance-related data of the machine (15) used to produce the shaft component (1) or the shaft portion or the shaft, and information to control the machine (15) at least in part.

4. The method according to claim 1, 2 or 3, **characterised in that** the data stored in the data memory (11) represent portions of the shaft component (1) or of the shaft portion or of the shaft.

5. The method according to one of the preceding claims, **characterised in that** the data from the plan (P) or the drawing or the survey process or the list are read into the data processing machine (12) by an input device, for example a scanner.

## Revendications

1. Procédé de fabrication d'un composant de regard (1) ou d'une section de regard ou d'un regard présentant un contour fonctionnel (2) avec un canal (3) permettant d'acheminer du fluide, et au moins un dispositif d'amenée (5) pour amener du fluide au composant de regard (1) ou à la section de regard ou au regard, et au moins un dispositif d'évacuation (6) pour évacuer du fluide du composant de regard (1) ou de la section de regard ou du regard, et, pour le composant de regard (1) ou la section de regard, une section de liaison (7) pour relier de manière étanche aux fluides le composant de regard (1) ou la section de regard à un composant, avec les étapes :
(A) de lecture ou d'entrée de données issues d'un plan (P) ou d'un dessin ou d'une opération de mesure ou d'un modèle de données ou d'une liste ou d'un système d'information géographique (GIS) ou d'une mémoire de données (11) dans une machine de traitement de données (12) ;
(B) de production d'un premier ensemble de données (13) à partir des données lues dans la machine de traitement de données (12), lequel représente un composant de regard (1) ou une section de regard ou un regard ;
(C) de production d'un deuxième ensemble de données (14) à partir du premier jeu de données (13), dans lequel le deuxième jeu de données (14) est adapté pour commander une machine (15) pour un enlèvement de matériau d'un corps (9) et/ou pour une addition de matériau sur celui-ci,
(D) de fabrication du composant de regard (1) ou de la section de regard ou du regard à partir du corps (9) à l'aide de la machine (15) pour l'enlèvement de matériau et/ou l'addition de matériau, qui utilise le deuxième ensemble de données lors de la fabrication du composant de regard ou de la section de regard ou du regard pour commander la machine, dans lequel le contour fonctionnel du composant de regard ou de la section de regard ou du regard est formé au moins par endroits à partir du corps par enlèvement de matériau et/ou par addition de matériau,
**caractérisé en ce que**
(E) le deuxième ensemble de données (14), qui est produit à partir du premier ensemble de données (13) et qui est adapté pour commander une machine (15) pour un enlèvement de matériau d'un corps (9) et/ou pour une addition de matériau sur celui-ci, comprend des informations, qui spécifient une succession de bandes de fraisage, une sélection d'outils de fraisage sommaire et de précision, une élaboration de sections auxiliaires et de stabilisation lors d'une impression 3D et qui simplifient ainsi la production du composant de regard ou de la section de regard ou du regard,
(F) une fabrication du composant de regard (1) ou de la section de regard ou du regard à partir d'un corps (9), qui est constitué d'un matériau polymère ou contient un matériau polymère, est effectuée à l'aide de la machine (15) pour l'enlèvement de matériau par fraisage et/ou pour l'addition de matériau par une opération d'impression 3D, laquelle utilise le deuxième ensemble de données (14) lors de la fabrication du composant de regard (1) ou de la section de regard ou du regard pour commander la machine (15) pour l'enlèvement de matériau et/ou pour l'addition de matériau,
(G) qu'après l'étape (F), le composant de regard (1) fabriqué ou la section de regard ou le regard est mesuré/mesurée par balayage et/ou par un procédé optique et/ou par réception d'un rayonnement électromagnétique réfléchi sur celui-ci.

2. Procédé selon la revendication 1, **caractérisé en ce que** le corps (9) est constitué d'un matériau polymère ou contient un matériau polymère pour fabriquer le composant de regard ou la section de regard ou le regard, une matière thermoplastique, et de manière préférée une polyoléfine, comme un polypropylène ou un polyéthylène ou un polybutylène, ou un copolymère des éléments mentionnés ci-avant, ou une polyoléfine réticulée, en particulier un polyéthylène réticulé, ou un chlorure de polyvinyle, ou un polyuréthane.

3. Procédé selon la revendication 1 ou 2, **caractérisé en ce que** le premier ensemble de données (13) comprend des informations pour représenter visuellement le composant de regard (1) ou la section de regard ou le regard, et des informations concernant des données géométriques et/ou liées à la puissance de la machine (15) employée pour la fabrication du composant de regard (1) ou de la section de regard ou du regard, et des informations pour commander au moins en partie la machine (15).

4. Procédé selon la revendication 1, 2 ou 3, **caractérisé en ce que** les données enregistrées dans la mémoire de données (11) représentent des sections du composant de regard (1) ou de la section de regard ou du regard.

5. Procédé selon l'une quelconque des revendications précédentes, **caractérisé en ce que** les données sont lues depuis le plan (P) ou le dessin ou l'opération de mesure ou la liste par un appareil d'entrée, comme un scanner, dans la machine de traitement de données (12).
